Europäisches Patentamt

European Patent Office

Office européen des brevets

(11) Publication number: **0 519 699 B1**

# EUROPEAN PATENT SPECIFICATION

(45) Date of publication of patent specification: **25.01.95**  (51) Int. Cl.6: **B01J 35/06**, C01B 21/26

(21) Application number: **92305544.6**

(22) Date of filing: **17.06.92**

(54) Low pressure drop, high surface area oxidation catalyst and catalyst for production of hydrocyanic acid.

(30) Priority: **17.06.91 US 716539**
**17.06.91 US 716540**

(43) Date of publication of application:
**23.12.92 Bulletin  92/52**

(45) Publication of the grant of the patent:
**25.01.95 Bulletin  95/04**

(84) Designated Contracting States:
**AT BE CH DE DK ES FR GB GR IT LI LU NL PT SE**

(56) References cited:
**EP-A- 0 259 966**
**EP-A- 0 364 153**
**DE-A- 2 829 035**
**DE-A- 2 855 102**
**GB-A- 2 062 486**

(73) Proprietor: **JOHNSON MATTHEY PUBLIC LIMITED COMPANY**
**New Garden House**
**78 Hatton Garden**
**London EC1N 8JP (GB)**

(72) Inventor: **Hochella, William A.**
**Box 2009,**
**R.D. 7 Lafayette Road**
**Coatesville,**
**Pennsylvania 19320 (US)**
Inventor: **Heffernen, Steven A.**
**216 Grist Mill Road**
**Ambler,**
**Pennsylvania 19002 (US)**

(74) Representative: **Wishart, Ian Carmichael et al**
**Patents Department**
**Johnson Matthey Technology Centre**
**Blounts Court**
**Sonning Common**
**Reading, Berks RG4 9NH (GB)**

Rank Xerox (UK) Business Services
(3.10/3.09/3.3.3)

**Description**

FIELD OF THE INVENTION

This invention relates to a low pressure drop, high surface area ammonia oxidation catalyst system and method. This invention also relates to a low pressure drop, high surface area catalyst system and method for production of hydrocyanic acid.

BACKGROUND OF THE INVENTION

Nitric acid is produced commercially by passing ammonia and air across a flat gauze woven from platinum-rhodium-palladium alloy wire. The ammonia, initially, is converted to nitric oxide over the precious metal gauze, and the nitric oxide is, subsequently, oxidised and absorbed to form a nitric acid. The conversion efficiency of ammonia to nitric oxide is a function of temperature, pressure, velocity of gas stream, volume of catalyst, and purity of the ammonia and air streams. The ammonia oxidation to nitric oxide generates a large exotherm and raises the temperature of the catalyst in the range of 810°C to 960°C. During the ammonia oxidation process some of the precious metal is volatilised from the surface of the gauze wire. The rate of loss is dependent on the temperature, pressure, and flow rate of gases across the catalyst surface. The cost of the precious metal lost from the ammonia oxidation catalyst is a significant part of the cost of operating a nitric acid plant.

In the acid production, the catalyst pack consists of 3 to 50 sheets of flat woven gauze. The conventional flat woven gauze is typically made with 3.15 mesh per mm (80 mesh per inch) and 0.076mm (.003") wire. However, UK patent GB 2062486 B discloses the use of a system where the diameter of the wire is reduced from the front to the back of the flat woven gauze pack resulting in maximum conversion efficiency with minimum precious metal content and therefore also minimum metal loss from the catalyst. Other recent disclosures include US 4,863,893 which claims improved catalyst "light-off" by the use of a high surface area per unit area of catalyst by the deposition of fine platinum particles onto the surface of the flat woven gauze. US 4,863,893 is a variation of the technology of US 3,470,019 which had a different method of deposition. Patent application EP 0 364 153 A1 claims the use of a flat knitted fabric of precious metal for the oxidation of ammonia to nitric oxide. Recently, a flat woven gauze of 2.756 mesh per mm (70 mesh per inch), 0.076mm (.003") wire diameter was introduced to the market place.

A platinum-rhodium catalyst is utilized in the Andrussow process, for the production of hydrocyanic acid or hydrogen cyanide (HCN). In the Andrussow process, methane, ammonia, and oxygen are reacted by passing that gas mixture through a platinum alloy gauze pad. The reaction takes place at about 1000°C, and the heat liberated enables it to be self-sustaining. HCN formation proceeds according to one or other of the following reactions:

$$CH_4 + NH_3 + 3/2\ O_2 \longrightarrow HCN + 3H_2O$$
$$NH_3 + CH_4 \longrightarrow HCN + 3H_2$$

The mixed gases are preheated to about 500°C, and the methane:ammonia mixture ratio is in the range 0.8 to 1.2:1.

Sufficient air is added to provide 25 to 40% of the theoretical requirement to oxidise the methane and ammonia. Reactors are similar to ammonia oxidation converters, although usually smaller in diameter. Since the gauze operates at about 1000°C, its radiant heat causes the converter walls to be hotter than in ammonia oxidation, and some ammonia is lost from the reaction by pre-decomposition. Some carbon monoxide and nitrogen are also formed by undesirable side reactions.

In hydrocyanic acid production, the catalyst pack consists of flat woven gauze. The conventional flat woven gauze is also typically made with 3.15 mesh per mm (80 mesh per inch) and 0.076mm (.003") wire.

The catalyst pack of elements or sheets of gauze of precious metals and its use to catalyse ammonia is disclosed in US 4,412,859, US 4,497,657 and US 4,526,614, all of which are hereby incorporated by reference, in toto,

By curve to flat ratio is meant the ratio of that portion of a wire in an element of a catalyst (sheet or gauze etc) that is not in the base plane of the element to the portion that is in that plane. When curved, it is the ratio of curved section to the flat section. By mesh count is meant the number of openings in a given area. The wire diameter and area for mesh count must be in the same units, such as millimetres or, alternatively inches.

2

SUMMARY OF THE INVENTION

This invention is a catalytic element for use in the catalytic oxidation of ammonia and for catalytic production of hydrocyanic acid. The element comprises a foraminous structure fabricated from a material consisting essentially of a metal selected from the group consisting of platinum, rhodium, palladium and alloys of mixtures thereof characterised by (a) a novel configuration whereby the initial product of the formula: curved the flat ratio (C/F) multiplied by mesh count (N) and wire diameter ($d_w$), for said element is greater than at least about 0.08 and (b) wherefore a given nitrogen throughput, the conversion efficiency is a function of the curved flat ratio (C/F), wire diameter ($d_w$) and mesh count (N) combination and conversion efficiency is improved by increasing the mesh count (N) for a given wire diameter, increasing the wire diameter ($d_w$) for a given mesh count, and increasing the curve to flat ratio (C/F) to a ratio of above 1.0. Preferably the initial product of the formula is greater than 0.2 and the curve to flat ratio (C/F) is above 1.00 (most preferably $\pi/2$). The preferred initial product of the formula is in the range of from 0.08 to about 10 and more preferred from about 0.2 to about 10. The preferred element is woven gauze, knitted fabric, fibres and combinations thereof. Preferably the element is in a series of said elements as a plurality of screens.

Preferably the element consists of platinum or essentially of platinum alloyed with one or more metals selected from the group consisting of nickel, cobalt, palladium, ruthenium, iridium, gold, silver and copper. The preferred element contains platinum present in an amount of at least of about 70% by weight.

The preferred embodiment of this invention is an element wherein (C/F) is in the range of from above 1.0 to about 4, N is the range of from 1.575 to 4.724 mesh per mm (40 to 120 per inch), $d_w$ is in the range of from about 0.025 to 0.46mm (0.001 to 0.018 inch) and their respective values are such that the initial product of the formula is greater than at least 0.08, more preferably C/F is from above 1.00 (most preferably $\pi/2$) to about 4 and the product of the formula is greater than 0.2. In another embodiment, the initial product is in the range of from 0.08 to about 10, more preferably from about 0.9 to about 8.

In a preferred embodiment of this invention, the C/F ratio is achieved by means of forming the element into a pleat-like configuration. The pleats are preferably parallel. Alternatively, the ratio can be achieved by means of pleats in concentric patterns. Such patterns can be circles, parallel lines or polygons. The ratio can also be achieved by means of intersecting patterns resulting in the waffle-like pattern. The waffle-like pattern can be regular comprising straight lines or curved lines, or both. The waffle-like pattern could also be random with either straight or curved lines, or both. In another embodiment the C/F ratio can be achieved by means of shaped depressions on the surface of the element.

One method of this invention is a method for catalytic oxidation of ammonia at temperatures above 850°C which comprises using as catalyst a foraminate element fabricated from metal consisting essentially of a metal from the group consisting of platinum, rhodium, palladium and alloys of mixtures thereof characterised by (a) a novel configuration whereby the initial product of the formula: curve to flat ratio (C/F) multiplied by mesh count (N) and wire diameter ($d_w$) for the element, is greater than at least about 0.08 and (b) where, for a given nitrogen throughput, the conversion efficiency is a function of the curve to flat ratio (C/F), wire diameter ($d_w$) and mesh count (N) combination and conversion efficiency is improved by increasing the mesh count (N) at a given wire diameter, increasing the wire diameter ($d_w$) at a given mesh count, and increasing the curve to flat ratio (C/F) to a ratio of above 1.0. Preferably the formula product is greater than about 0.9 and the C/F ratio is above about $\pi/2$. Preferably the product of the formula is in the range of from about 0.08 to about 10, more preferably to about 8, most preferably about 0.20 to about 8.

The method preferably uses elements of woven gauze, knitted fabric, fibres or combinations thereof. Preferably the elements are in a plurality of screens. The preferred method of this invention uses elements consisting essentially of platinum or platinum alloys of one or more metals selected from the group consisting of nickel, cobalt, palladium, rhodium, ruthenium, iridium, gold, silver and copper. Preferably platinum is present in the amount of at least about 70% by weight.

Another embodiment of this invention when using multiple elements of this invention is modulating the initial product of the formula across the elements. The product can be modulated to change from higher at those elements initially contacted by ammonia to lower where the ammonia last contacts the elements. Or vice versa, from lower as the elements initially contact the ammonia to higher where the ammonia last contacts the elements. The product of the formula can change by a recognisable pattern across the system, preferably a pattern described by a variety of mathematical functions, most preferably the mathematical function selected from the groups consisting of linear, parabolic, hyperbolic, step, sinusoidal and combinations thereof. This modulation described both in the method of this invention and in the catalyst system using elements described by this invention.

The modulation may be varying any one of the product multipliers C/F, $d_w$ or N independently and/or in coordination, C/F, N and $d_w$ may be constant or variable both screen-to-screen and/or across each screen

EP 0 519 699 B1

and independently varied across the warp and/or across the weft of the woven or knitted screen. Thus, when variable within the screen, the definition of C/F, N and $d_w$ in this invention shall all be average numbers for each individual screen. For example, varying both N and $d_w$, the formula would be calculated as follows:

Warp:                                  1.969 wires per mm at 0.147mm wire diameter (50 wires per inch at .0058 inch wire diameter).

Weft:                                   1.18 wires per mm at 0.25mm wire diameter (30 wires per inch at .0097 inch wire diameter).

Developed Curve to Flat:    2.61

$$C/F \times N \times d_w \;=\; \frac{(50+30)}{2} \;\times\; \frac{(.0058 + .0097)}{2} \;\times\; 2.61 \;=\; 0.8091$$

(using inch units).

The other method of this invention is a method for catalytic production of HCN which comprises using as catalyst the same catalyst as described above.

This invention provides the following benefits.

1. By using a C/F ratio over 1, formerly flat screens are made three-dimensional, thereby increasing the surface area for greatly improved catalytic activity of the catalyst element. For example, using typical 3.15 mesh/mm, 0.076mm wire (80 mesh, 3mil (0.003")) screen, surface area per cross-sectional area of the reactor can be increased three-fold from 1.5 units at C/F equals 1, ie flat, to 4.5 units at C/F equals 3.

2. The higher surface area, per screen, made possible by increasing C/F ratio permits fewer elements or screens in the system and lower pressure difference across the total system used. This in turn permits higher throughput rates of ammonia through the system, ie, more tons per day conversion of ammonia from the same equipment.

3. The conversion of ammonia or methane and ammonia over the catalyst elements (screens) is also improved by the higher surface area of each element, more ammonia or methane and ammonia, per ton of throughput, is converted to nitric acid or hydrocyanic acid through the same equipment.

4. By another embodiment of this invention, namely modulation of the factors determining surface area, either individually or by the formula, C/F (N) $d_w$, the catalyst surface area can be tailored to be maximum at the point in the system (screen pack) it is most effective and efficient.

The formation of a non-planar element according to the present invention may be accomplished in different ways. A particularly suitable and simple method is to pass a planar screen having the desired N and $d_w$ values through two horizontal axis cooperating toothed corrugating rollers, causing the plastic deformation of the screen. The rollers are spaced according to the normal compressed thickness of the screen or screens, and the tooth profile is, of course, designed to give the desired curve to flat ratio. Normally, two to seven catalyst screens would be used to form a pad for corrugating. It may be desirable, for example if flexible knitted catalyst screen is to be used, to provide additional support on the bottom of the assembly fed to the corrugating rollers. Such support may be provided by a woven catalyst screen, or even by a non-catalytic support screen, for example a stainless steel screen.

BRIEF DESCRIPTION OF THE DRAWINGS

Figure 1 is a computer model generated set of curves projecting how the low pressure drop catalyst system would lower pressure drop and increase residence time in 100 T/m²/day plant using 30 sheets of 0.076mm wire 3.15 mesh per mm (3mil (0.003") 80 mesh) sheets (elements) at varying C/F ratios.

Figure 2 is a prior art curve of actual values of conversion efficiency at various residence time (sec)-/number of gauzes (elements).

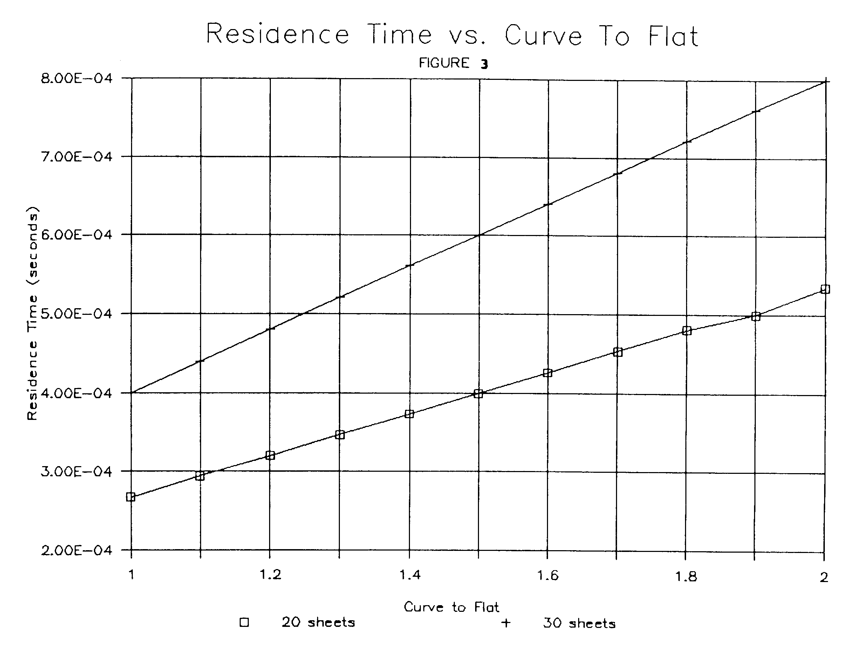

Figure 3 is a set of curves showing improved residence time at higher C/F (curve to flat) ratios.

Figure 4 is a curve showing conversion efficiency at a 100 ton nitric acid plant using 30 sheets (elements) of catalyst at various C/F rations.

Figure 5 is a second curve showing conversion efficiency but with 20 sheets (elements).

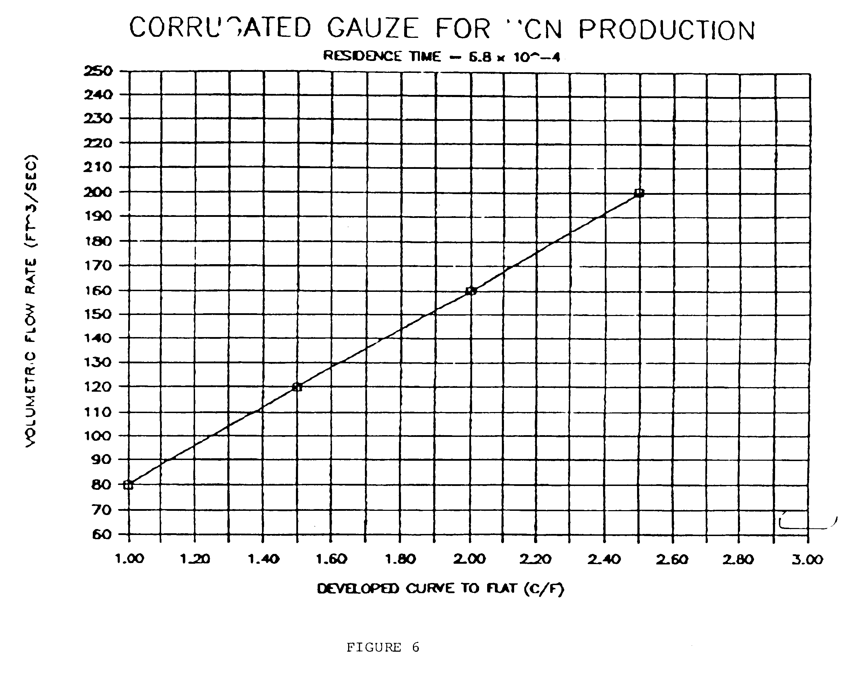

Figure 6 is a curve showing the relation of flow to the curve to flat ratio of elements at a specific residence time for HCN production.

4

Discussion

Pressure drop across the system would be significantly lower, especially above C/F of $\pi/2$ and residence times can be significantly increased at higher C/F ratios than 1. For example, residence time is doubled between C/F values of about 1.1 and about 1.6.

Conversion efficiency increases with residence time to an optimum at a residence time of about 7 x $10^{-4}$ seconds with about 50 gauzes (elements or sheets).

Thus in a preferred embodiment of this invention, the optimum residence time would be found for the commercial plant in which the system will be used. Then the curves would be generated using the gas flow loading, number of sheets in the catalyst system and the desired mesh and wire diameter of each sheet desired. A series of such curves could be generated for various desired wire diameters and meshes. Then the computer generated residence time and pressure drop curves would make possible picking a C/F ratio for the actual commercial application.

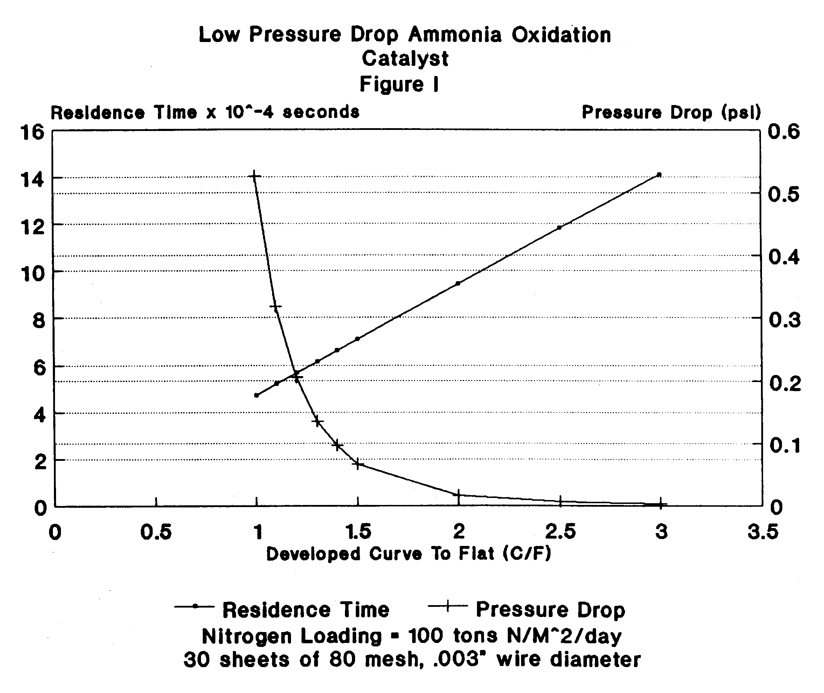

Figure 1 shows that pressure drop across the system would be significantly lower, especially above C/F of $\pi/2$ and residence times can be significantly increased at higher C/F ratios than 1. For example, residence time is doubled between C/F values of about 1.1 and about 1.6.

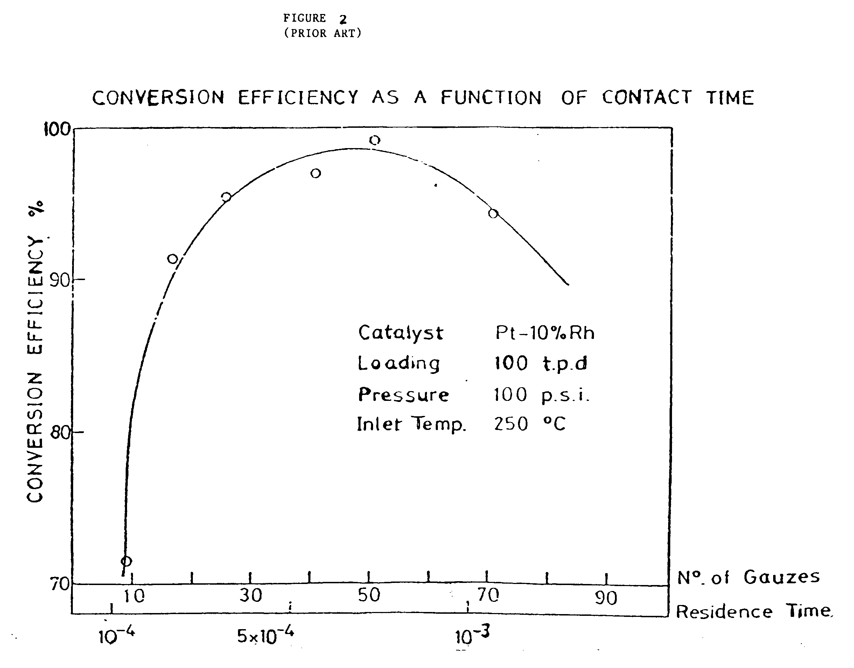

Figure 2 shows the importance of residence time in a prior art system at the conditions shown. The curve shows that conversion efficiency increases with residence time to an optimum at a residence time of about 7 x $10^{-4}$ seconds with about 50 gauzes (elements or sheets).

Thus in a preferred embodiment of this invention, the optimum residence time would be found for the commercial plant in which the system will be used. Then the curves similar to Figure 1 would be generated using the nitrogen loading, number of sheets in the catalyst system and the desired mesh and wire diameter of each sheet desired. A series of such curves could be generated for various desired wire diameters and meshes. Then the computer generated residence time and pressure drop curves would make possible picking a C/F ratio for the actual commercial application. For a crude example, for the 100 T/m²/day ammonia conversion plant using a 30 sheet (elements) catalyst system of 3mil wire diameter, 80 mesh catalyst (90% Pt:10% Rh) would pick the highest C/F ratio available (or practicable) using Figure 1.

## DESCRIPTION OF PREFERRED EMBODIMENT

A computer model of the system of this invention is used to predict performance of various catalyst systems is various commercial plant situations.

Example 1

| Nitric Acid Production: | 100 tons per day |
|---|---|
| Nitrogen Loading: | 116 tons N/meter²/day |
| Inlet Temperature: | 250 ° C |
| Number of Woven Sheets: | 30 |

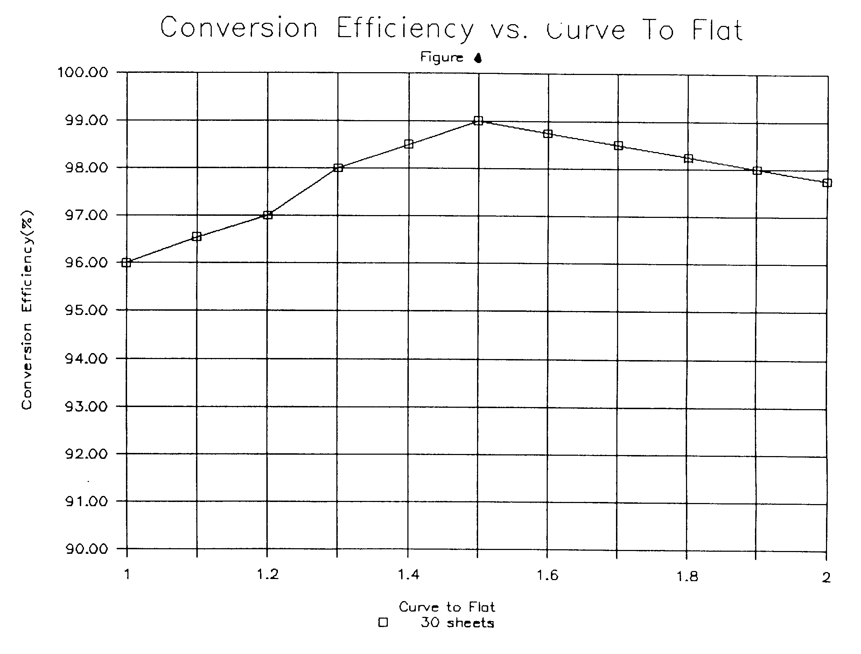

The current residence time for a flat system is 4 x $10^{-4}$ seconds with a conversion efficiency of 96% (see Figure 4 for 30 sheets).

It has been found through experimentation that the optimum efficiency is obtained at a residence time of 6.0 x $10^{-4}$ seconds. To obtain this optimum residence time, the developed curve to flat ratio must be increased from 1 to 1.5. This will increase the conversion of ammonia from 96% to 99% at the same operating conditions.

Example 2

The operating conditions are the same as the preceding example.

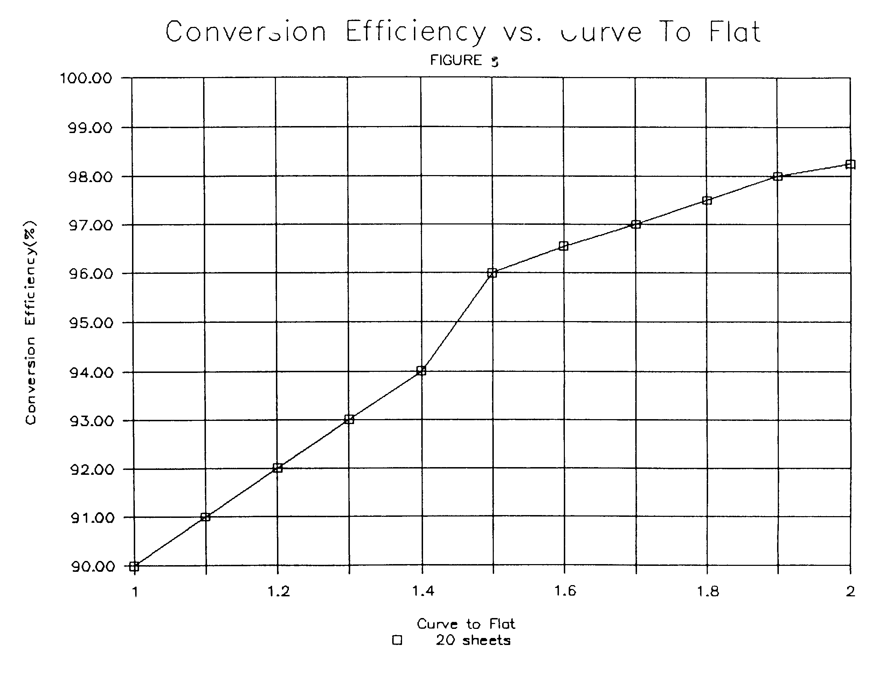

The nitric acid producer is not interested in increasing conversion efficiency, but would like to lower the precious metal loading in his reactor. This can be achieved by arbitrarily reducing the number of sheets being used. For the number of sheets equal to 20, the curve to flat ratio must be increased from 1 to 1.5 to obtain a conversion efficiency of 96% (see Figure 5 for 20 sheets).

The following are examples for use in low pressure drop, high production capacity gauze for the production of Hydrogen Cyanide.

5

Example 3 (Prior Art HCN)

A reactor for the production of hydrogen cyanide has a reactor diameter of 35 inches. The volumetric flow rate of ammonia, air and methane is $2.266m^3/sec$ (80ft 3/sec). It has been found that the maximum selectivity of the reactants to product is reached at a residence time of $6.8 \times 10^{-4}$ seconds. With a volumetric flow rate of $2.266m^3/sec$ and a reactor diameter 88.9cm (35 inches), 15 sheets of gauze are required to obtain a residence time of $6.8 \times 10^{-4}$ seconds.

Example 4

The HCN producer wants to increase the volumetric flow rate of ammonia, air, and methane to $5.66m^3/sec$ (200ft 3/sec) by increasing the curve to flat ratio of the gauze. Figure 1 is a plot of volumetric flow rate vs developed curve to flat ratio at a residence time of $6.8 \times 10^{-4}$ seconds and 15 sheets of gauze. To increase the production flow rate to $5.66m^3/sec$, the curve to flat ratio must be increased to 2.5.

The increased developed curve to flat ratios in excess of 1:1, independent of how they are formed, accomplish the following:

1. If it is assumed that the same precious metal alloy mesh and wire diameter system (3.15 mesh/mm, 0.076mm wire diameter) is used, the amount of available open area in the corrugated woven gauze system per unit area of reactor cross section increases; the amount of precious metal alloy available for catalysis increases per cross-sectional area of reactor; the initial pressure drop and the rate of increase of pressure drop across corrugated woven gauze system decrease; the amount of hydrogen cyanide production per cross-sectional area of reactor is increased; the increase of decrease or the above are functions of the developed curve to flat ratio.

2. If it is assumed that a precious metal alloy gauze system of equal weight per cross-sectional area of the reactor is used either the meshes per inch in the warp or the weft or both, wire diameter in the warp or the weft or both, of both must be changed.

Example 5

Designated C/F ratio = 2.6:1
Open Area = 2.61 x equivalent flat pack open area.
Precious Metal Alloy Weight = 2.61 x equivalent of flat pack precious metal alloy weight

% Relative Reduction in Pressure Drop =

$$\frac{1}{2.61^2} = 0.1467 \text{ or } 14.67\% \text{ of equivalent flat woven gauze system}$$

(Assumption that flat pack has pressure drop of 1 unit.)

While the invention has been described in connection with what is presently considered to be the most practical and preferred embodiments, the invention is not limited to the disclosed embodiment but, on the contrary, is intended to cover various modifications and equivalents included within the spirit and scope of the following claims.

**Claims**

**1.** A catalytic element for use in the catalytic oxidation of ammonia or ammonia in conjunction with methane, said element comprising a foraminous structure fabricated from a material consisting essentially of a metal selected from the group consisting of platinum, rhodium, palladium and alloys of mixtures thereof characterised by (a) a novel non-planar configuration whereby the initial product of the formula: curve to flat ratio (C/F) multiplied by mesh count (N) and wire diameter ($d_w$), for said element is greater than at least about 0.08 and (b) where, for a given ammonia throughput, the conversion efficiency is a function of the curve to flat ratio (C/F), wire diameter ($d_w$) and mesh count (N) combination and conversion efficiency is improved by increasing the mesh content (N) for a given wire diameter, increasing the wire diameter ($d_w$) for a given mesh count, and increasing the curve to flat ratio (C/F) to a ratio of above 1.0.

2. An element according to claim 1, wherein the initial product of said formula is greater than 0.9 and the curve to flat ratio (C/F) is above about $\pi/2$.

3. An element according to claim 1 or 2, wherein the initial product of said formula is in the range of from about 0.08 to about 10.

4. An element according to claim 3, wherein said product is from about 0.2 to about 10.

5. An element according to any one of the preceding claims, wherein said element is a woven gauze, knitted fabric, fibres or combinations thereof.

6. An element according to any one of the preceding claims, in combination with one or more other catalytic elements to form a catalyst pack.

7. An element according to any one of the preceding claims, wherein said element consists essentially of platinum alloyed with one or more metals selected from the group consisting of nickel, cobalt, palladium, rhodium, ruthenium, iridium, gold, silver and copper.

8. An element according to claim 7, wherein the platinum is present in an amount of at least about 70% by weight.

9. An element according to any one of the preceding claims, wherein C/F is in the range of from about 1.00 to about 4 and the product of said formula is greater than about 0.08.

10. An element according to any one of the preceding claims, wherein C/F is in the range of from above 1.0 to about 4, N is in the range of from about 1.57 to 4.724 mesh per mm (40 or 120 per inch), $d_w$ is in the range of from about 0.025 to 0.46mm (0.001 to 0.018 inches) and their respective values are such that the initial product of said formula is greater than at least about 0.08.

11. An element according to any one of the preceding claims, wherein said C/F ratio is achieved by means of forming said element into a pleat-like configuration.

12. An element according to claim 11, wherein the pleats are parallel.

13. An element according to claim 11, wherein said C/F ratio is achieved by means of pleats in concentric patterns.

14. An element according to any one of the preceding claims, wherein said C/F ratio is achieved by means of shaped depressions on the surface of said element.

15. A method for the catalytic oxidation of ammonia or ammonia in conjunction with methane at temperatures above 850°C, wherein the catalyst comprises a catalytic element according to any one of claims 1 to 14.

16. A method according to claim 15, wherein said product changes from higher at the elements initially contacted by ammonia to lower where said ammonia last contacts the elements.

17. A method according to claim 15, wherein said product changes from lower at the elements initially contacted by ammonia to higher where said ammonia last contacts the elements.

18. The use of a catalytic element according to any one of claims 1 to 14, as a catalyst in the catalytic oxidation of ammonia or of ammonia in conjunction with methane.

**Patentansprüche**

1. Katalytisches Element zur Verwendung zur katalytischen Oxidation von Ammoniak oder Ammoniak zusammen mit Methan, wobei das Element eine perforierte Struktur umfaßt, die aus einem Material hergestellt wurde, das im wesentlichen aus einem Metall ausgewählt aus der Gruppe bestehend aus Platin, Rhodium, Palladium und Legierungen von Mischungen davon besteht, gekennzeichnet durch (a) eine neue nicht-planare Konfiguration, wodurch das Anfangsprodukt der Formel: Verhältnis gebogen/flach (C/F) multipliziert mit der Maschenzahl (N) und dem Drahtdurchmesser ($d_w$) für dieses Element größer ist als mindestens etwa 0,08 und (b) worin für einen gegebenen Ammoniakdurchsatz die Umwandlungseffizienz eine Funktion des Verhältnisses von gebogen/flach (C/F), des Drahtdurchmessers ($d_w$) und der Maschenzahl (N) in Kombination ist, und die Umwandlungseffizienz verbessert wird, indem die Maschenzahl (N) für einen gegebenen Drahtdurchmesser erhöht wird, der Drahtdurchmesser ($d_w$) für eine gegebene Maschenzahl erhöht wird und das Verhältnis gebogen/flach (C/F) auf ein Verhältnis von mehr als 1,0 erhöht wird.

2. Element nach Anspruch 1, worin das Anfangsprodukt der Formel größer als 0,9 ist und das Verhältnis gebogen/flach (C/F) größer als etwa $\pi/2$ ist.

3. Element nach Anspruch 1 oder 2, worin das Anfangsprodukt der Formel im Bereich von etwa 0,08 bis etwa 10 liegt.

4. Element nach Anspruch 3, worin das Produkt etwa 0,2 bis etwa 10 ist.

5. Element nach einem der vorhergehenden Ansprüche, worin das Element aus gewobener Gaze, gewirktem Gewebe, Fasern oder Kombinationen davon besteht.

6. Element nach einem der vorhergehenden Ansprüche in Kombination mit einem oder mehreren anderen katalytischen Elementen zur Bildung eines Katalysatorsatzes.

7. Element nach einem der vorhergehenden Ansprüche, worin das Element im wesentlichen aus Platin legiert mit einem oder mehreren Metallen ausgewählt aus der Gruppe bestehend aus Nickel, Kobalt, Palladium, Rhodium, Ruthenium, Iridium, Gold, Silber und Kupfer besteht.

8. Element nach Anspruch 7, worin Platin in einer Menge von mindestens etwa 70 Gew.-% vorhanden ist.

9. Element nach einem der vorhergehenden Ansprüche, worin C/F im Bereich von etwa 1,00 bis etwa 4 liegt und das Produkt der Formel größer als etwa 0,08 ist.

10. Element nach einem der vorhergehenden Ansprüche, worin C/F im Bereich von etwa 1,0 bis etwa 4 liegt, N im Bereich von etwa 1,57 bis 4,724 Maschen pro mm (40 bis 120 pro inch) liegt, $d_w$ im Bereich von etwa 0,025 bis 0,46 mm (0,01 bis 0,018 inch) liegt und die entsprechenden Werte so sind, daß das Anfangsprodukt der Formel größer als mindestens etwa 0,08 ist.

11. Element nach einem der vorhergehenden Ansprüche, worin das Verhältnis C/F erreicht wird, indem das Element in einer faltenartigen Konfiguration gebildet wird.

12. Element nach Anspruch 11, worin die Falten parallel sind.

13. Element nach Anspruch 11, worin das Verhältnis C/F erreicht wird durch Falten in konzentrischen Mustern.

14. Element nach einem der vorhergehenden Ansprüche, worin das Verhältnis C/F erreicht wird durch geformte Vertiefungen auf der Oberfläche des Elements.

15. Verfahren zur katalytischen Oxidation von Ammoniak oder Ammoniak zusammen mit Methan bei Temperaturen von mehr als 850°C, worin der Katalysator ein katalytisches Element nach einem der Ansprüche 1 bis 14 umfaßt.

16. Verfahren nach Anspruch 15, worin sich das Produkt verändert von höheren Werten bei den Elementen, die anfangs mit Ammoniak in Kontakt sind, zu niedrigeren Werten, bei denen der Ammoniak zuletzt mit den Elementen in Kontakt kommt.

**17.** Verfahren nach Anspruch 15, worin sich das Produkt verändert von niedrigeren Werten bei den Elementen, mit denen der Ammoniak anfangs in Kontakt kommt, zu höheren Werten, bei denen der Ammoniak zuletzt mit den Elementen in Kontakt kommt.

**18.** Verwendung eines katalytischen Elements nach einem der Ansprüche 1 bis 14 als Katalysator für die katalytische Oxidation von Ammoniak oder Ammoniak zusammen mit Methan.

**Revendications**

**1.** Elément catalytique destiné à servir dans l'oxydation catalytique de l'ammoniac ou de l'ammoniac de concert avec du méthane, ledit élément comprenant une structure foraminée fabriquée en un matériau consistant essentiellement en un métal choisi dans l'ensemble consistant en le platine, le rhodium, le palladium et des alliages ou des mélanges de ces métaux, élément caractérisé par (a) une nouvelle configuration non plate, de sorte que le produit initial de la formule (mathématique) : rapport entre partie courbe et partie plate (C/P) multiplié par le nombre de mailles ou numéro de mailles (N) et le diamètre du fil ($d_f$) pour ledit élément est supérieur à une valeur d'au moins 0,08 environ, et (b) en ce que, pour un débit donné d'ammoniac, le rendement ou taux de conversion est fonction de la combinaison du rapport entre la partie courbe et la partie plate (C/P), le diamètre du fil ($d_f$) et le nombre de mailles (ou le numéro ; N) et le rendement ou le taux de la conversion est amélioré par augmentation du nombre de mailles (N) pour un diamètre donné de fil, l'augmentation du diamètre de fil ($d_f$) pour un nombre donné de mailles, et l'augmentation, à une valeur supérieure à 1,0, du rapport partie courbe à partie plate (C/P).

**2.** Elément selon la revendication 1, dans lequel le produit initial de ladite formule (mathématique) est supérieur à 0,9, et le rapport entre partie courbe et partie plate (C/P) est supérieur à environ $\pi/2$.

**3.** Elément selon la revendication 1 ou 2, dans lequel le produit initial de ladite formule (mathématique) se situe entre environ 0,08 et environ 10.

**4.** Elément selon la revendication 3, dans lequel ledit produit se situe entre environ 0,2 et environ 10.

**5.** Elément selon l'une quelconque des revendications précédentes, dans lequel ledit élément est constitué par une toile de gaze tissée, une étoffe tricotée, des fibres ou leurs combinaisons.

**6.** Elément selon l'une quelconque des revendications précédentes, en combinaison avec un ou plusieurs autres éléments catalytiques pour former un ensemble ou bloc catalytique.

**7.** Elément selon l'une quelconque des revendications précédentes, dans lequel ledit élément consiste essentiellement en du platine allié avec un ou plusieurs métaux choisis dans l'ensemble consistant en le nickel, le cobalt, le palladium, le rhodium, le ruthénium, l'iridium, l'or, l'argent et le cuivre.

**8.** Elément selon la revendication 7, dans lequel le platine est présent en une quantité d'au moins 70 % environ en poids.

**9.** Elément selon l'une quelconque des revendications précédentes, dans lequel le rapport C/P se situe entre environ 1,00 et environ 4, et le produit de ladite formule (mathématique) est supérieur à 0,08.

**10.** Elément selon l'une quelconque des revendications précédentes, dans lequel le rapport C/P se situe entre une valeur supérieure à 1,0 et environ 4 ; N se situe entre environ 1,57 et 4,724 mailles par millimètre (40 ou 120 mailles par pouce) ; $d_f$ se situe entre environ 0,025 et 0,46 mm (0,001 à 0,018 pouce), et leurs valeurs respectives sont telles que le produit initial de ladite formule (mathématique) est supérieur à une valeur d'au moins environ 0,08.

**11.** Elément selon l'une quelconque des revendications précédentes, dans lequel ledit rapport C/P est obtenu grâce à la mise dudit élément sous forme d'une configuration analogue à du plissage.

**12.** Elément selon la revendication 11, dans lequel les plis sont parallèles.

**13.** Elément selon la revendication 11, dans lequel le rapport C/P est obtenu à l'aide de plis disposés en des formes ou modèles concentriques.

**14.** Elément selon l'une quelconque des revendications précédentes, dans lequel ledit rapport C/P est obtenu à l'aide de creux ou dépressions façonnés à la surface dudit élément.

**15.** Procédé pour l'oxydation catalytique de l'ammoniac, ou de l'ammoniac en présence de méthane, à des températures supérieures à 850 °C, procédé dans lequel le catalyseur comprend un élément catalytique selon l'une quelconque des revendications 1 à 14.

**16.** Procédé selon la revendication 15, dans lequel ledit produit (mathématique) varie d'une valeur supérieure pour les éléments venant initialement au contact de l'ammoniac à une valeur inférieure lorsque ledit ammoniac contacte en dernier lieu les éléments.

**17.** Procédé selon la revendication 15, dans lequel ledit produit (mathématique) varie d'une valeur inférieure à l'endroit où les éléments viennent initialement en contact avec l'ammoniac à une valeur supérieure à l'endroit où ledit ammoniac vient en dernier lieu en contact avec les éléments.

**18.** Utilisation d'un élément catalytique selon l'une quelconque des revendications 1 à 14 comme catalyseur dans l'oxydation catalytique de l'ammoniac ou de l'ammoniac en présence de méthane.

## Low Pressure Drop Ammonia Oxidation
## Catalyst
## Figure I

Residence Time x 10^-4 seconds      Pressure Drop (psi)

Developed Curve To Flat (C/F)

— Residence Time    + Pressure Drop

Nitrogen Loading = 100 tons N/M^2/day
30 sheets of 80 mesh, .003" wire diameter

EP 0 519 699 B1

FIGURE 2
(PRIOR ART)

CONVERSION EFFICIENCY AS A FUNCTION OF CONTACT TIME

Catalyst    Pt–10%Rh
Loading    100 t.p.d
Pressure    100 p.s.i.
Inlet Temp.    250 °C

EP 0 519 699 B1

Residence Time vs. Curve To Flat

FIGURE 3

# Conversion Efficiency vs. Curve To Flat

Figure 4

EP 0 519 699 B1

# Conversion Efficiency vs. Curve To Flat

FIGURE 5

EP 0 519 699 B1

# CORRUGATED GAUZE FOR HCN PRODUCTION

## RESIDENCE TIME — 6.8 × 10^-4

FIGURE 6

EP 0 519 699 B1